# EUROPEAN PATENT APPLICATION

(11) **EP 3 290 882 A1**
(43) Date of publication of application: **07.03.2018**
(21) Application number: 15881425.1
(22) Date of filing: 02.06.2015
(51) Int. Cl.: G01J 5/10

(54) **PYROELECTRIC SENSOR**

(71) Applicant: Dongguan Tranesen Optoelectronics Co., Ltd, Guangdong 523651 (CN)
(72) Inventor: LU, Weihua, Shenzhen, Guangdong 518034 (CN); HE, Jiang, Shenzhen, Guangdong 518034 (CN)
(74) Representative: Laufhütte, Dieter
(86) International application number: PCT/CN2015/080565
(87) International publication number: WO 2016/192035

(57) **Abstract**

The present invention discloses a pyroelectric sensor, comprising a tube cap and a tube socket which are matched, a circuit board disposed in the tube cap, a chip and an induction unit which are electrically connected with the circuit board, and a plurality of pins which are plugged in the tube socket and electrically connected with the circuit board, wherein the induction unit is disposed at one side, which faces the tube cap, of the circuit board, and the chip is disposed at another side, which faces the tube socket, of the circuit board. According to the pyroelectric sensor disclosed by the present invention, the induction unit and the chip are respectively disposed at different sides of the circuit board to isolate thermal radiation of the chip, so that false positives caused by interfering the induction unit are avoided, and the reliability and the efficiency of the pyroelectric sensor are improved.

## Description

### TECHNICAL FIELD

The present invention relates to the technical field of sensors, and particularly relates to a pyroelectric sensor.

### BACKGROUND

A pyroelectric sensor is a thermosensitive detecting apparatus designed according to pyroelectric effect, and is capable of detecting the change of infrared energy in a noncontact manner, converting the change into a voltage signal and amplifying and outputting it. In an existing pyroelectric sensor, an induction unit and a chip are both disposed on one side of a circuit board, and the induction unit is susceptible to thermal radiation interference of the chip, so that false positives are easily caused. In addition, the existing pyroelectric sensor may not withstand a relatively large mechanical impact force.

### SUMMARY

A technical problem to be solved by the present invention is to provide a pyroelectric sensor with high reliability.

A technical scheme employed for solving its technical problem by the present invention is to provide a pyroelectric sensor, comprising a tube cap and a tube socket which are matched, a circuit board disposed in the tube cap, a chip and an induction unit which are electrically connected with the circuit board, and a plurality of pins which are plugged in the tube socket and electrically connected with the circuit board, wherein the induction unit is disposed at one side, which faces the tube cap, of the circuit board, and the chip is disposed at another side, which faces the tube socket, of the circuit board.

Preferably, the pyroelectric sensor further comprises an insulating spacer supporting and rising the induction unit on the circuit board, wherein the insulating spacer is disposed between the induction unit and the circuit board.

Preferably, the pyroelectric sensor further comprises an insulating supporting structure disposed between the tube socket and the circuit board; the circuit board is disposed on the supporting structure so that a receiving space is formed between the circuit board and the tube socket, and the chip is disposed in the receiving space.

Preferably, the supporting structure comprises an insulating cavity spacer disposed on the tube socket; and one end of each pin sequentially penetrates through the tube socket and the insulating cavity spacer and is electrically connected with the circuit board.

Preferably, the insulating cavity spacer comprises two arc-shaped spacers, and the receiving space is formed between the arc-shaped spacers after being combined.

Preferably, the supporting structure comprises positioning portions, each positioning portion is disposed on one end, which is plugged in the tube socket, of the corresponding pin, the circuit board is supported on the positioning portions, and the receiving space is formed by a space among the positioning portions.

Preferably, the pyroelectric sensor further comprises an optical filter, wherein a window is provided on a top surface, which is far away from the tube socket, of the tube cap, and the optical filter is disposed in the window and is opposite to the induction unit.

Preferably, the induction unit comprises a pyroelectric sensing unit.

Preferably, the circuit board comprises a substrate, and a resistor element and a capacitor element which are disposed on the substrate, wherein the resistor element, the capacitor element and the induction unit are all positioned at one side, which faces the tube cap, of the substrate, and the chip is positioned at another side, which faces the tube socket, of the substrate.

Preferably, the substrate is provided with a plurality of through holes corresponding to the pins, and the end portion of one end, which is plugged in the tube socket, of each pin is disposed in the corresponding through hole in a penetrating manner.

According to the pyroelectric sensor disclosed by the present invention, the induction unit and the chip are respectively disposed at different sides of the circuit board to isolate thermal radiation of the chip, so that false positives caused by interfering the induction unit are avoided, and the reliability and the efficiency of the pyroelectric sensor are improved.

In addition, by disposing the supporting structure on the tube socket, the mechanical strength of the whole sensor is improved, and its impact resistance is increased.

### BRIEF DESCRIPTION OF THE DRAWINGS

The present invention will be further explained below with reference to the accompanying drawing and embodiments, wherein:

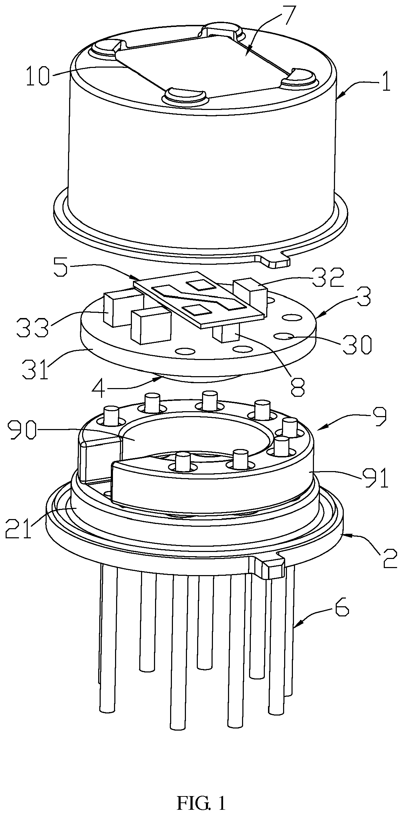

FIG. 1 is an exploded perspective view of a pyroelectric sensor according to an embodiment of the present invention.

### DETAILED DESCRIPTION

To more clearly understand the technical feature, the objective and the effect of the present invention, now, the detailed description of the present invention will be explained in detail with reference to the accompanying drawing.

As shown in FIG. 1, the pyroelectric sensor of an embodiment of the present invention comprises a tube cap 1 and a tube socket 2 which are matched, a circuit board 3, a chip 4 and an induction unit 5 which are disposed in the tube cap 1, and a plurality of pins 6. Both he chip 4 and the induction unit 5 are electronically connected with the circuit board 3, and the pins 6 are plugged in the tube socket 2 and electronically connected with the circuit board 3.The induction unit 5 is disposed at one side, which faces the tube cap 1, of the circuit board 3, and the chip 4 is disposed at another side, which faces the tube socket 2, of the circuit board 3, and therefore, the induction unit 5 and the chip 4 are separated, to avoid the induction unit 5 from being interfered by thermal radiation of the chip 4, guarantee the induction unit 5 to work normally, and improve the reliability and the efficiency of the sensor.

Wherein the tube socket 2 is connected to an opening in a bottom portion of the tube cap 1 in a matching manner so as to enclose an internal space of the tube cap 1, and the circuit board 3, the chip 4 and the induction unit 5 are all positioned in the enclosed internal space. A step 21 may be formed on a surface, which faces the tube cap 1, of the tube socket 2, the bottom portion of the tube cap 1 is buckled on a periphery of the step 21, and the circuit board 3 is positioned above this step 21 in the tube cap 1.

A window 10 is provided on a top surface, which is far away from the tube socket 2, of the tube cap 1, for disposing an optical filter 7 therein. Correspondingly, the pyroelectric sensor further comprises the optical filter 7; and the optical filter 7 is disposed in the window 10 and is opposite to the induction unit 5. The optical filter 7 may be an infrared filter.

The circuit board 3 may comprise a substrate 31, and a resistor element 32 and a capacitor element 33 which are disposed on the substrate 31, wherein the resistor element 32, the capacitor element 33 and the induction unit 5 are all positioned at one side, which faces the tube cap 1, of the substrate 31, and the chip 4 is positioned at another side, which faces the tube socket 2, of the substrate 31. In this embodiment, the induction unit 5 is positioned in a centre zone above the substrate 31, and the resistor element 32 and the capacitor element 32 are positioned around the induction unit 5 on the substrate 31.

The substrate 31 is provided with a plurality of through holes 30 corresponding to the pins 6, and the through holes 30 are in one-to-one correspondence to the pins 6. The end portion of one end, which is plugged in the tube socket 2, of each pin 6 is disposed in the corresponding through holes 30 in a penetrating manner. The end portion of the pin 6 may be connected with the substrate 31 by means of a welding manner. The other end, which is positioned outside the tube socket 2, of the pin 6 extends from the tube socket 2 towards outside to be connected with an external element.

The chip 4 and the induction unit 5 are respectively positioned at two opposite sides of the circuit board 3. The pyroelectric sensor further comprises an insulating spacer 8 supporting and rising the induction unit 5 on the circuit board 3 to prevent the induction unit 5 from being in direct contact with the circuit board 3 and further reduce the interference of thermal radiation of the chip 4 on the induction unit 5 as well as the interference of noise on the induction unit 5. The insulating spacer 8 is disposed between the induction unit 5 and the circuit board 3, which may be fixedly connected with the induction unit 5 and the circuit board 3 by glue. In this embodiment, the induction unit 5 comprises a pyroelectric sensing unit; the insulating spacer 8 is of a silicon spacer, the shape of which is not defined. The chip 4 may be an ADC&MCU chip, which is highly integrated, and its corresponding modes may be flexibly set as needed.

Further, the pyroelectric sensor further comprises an insulating supporting structure 9 which is disposed between the tube socket 2 and the circuit board 3. The circuit board 3 is disposed on the supporting structure 9, so that a receiving space 90 is formed between the circuit board 3 and the tube socket 2, and the chip 4 is disposed in the receiving space 90, in this way, the chip 4 may be prevented from being extruded, the mechanical strength of the whole sensor is enhanced, and the impact resistance is improved.

As shown in FIG. 1, in this embodiment, the supporting structure 9 comprises an insulating cavity spacer 91 disposed on the tube socket 2; and one end of the pin 6 sequentially penetrates through the tube socket 2 and the insulating cavity spacer 91 and is electrically connected with the circuit board 3. Holes are provided in the insulating cavity spacer 91 for one end of each pin 6 to penetrates through.

The insulating cavity spacer 91 may comprise two arc-shaped spacers, and a receiving space 90 in which the chip 4 is received is formed between the arc-shaped spacers after being combined. It should be understood that the insulating cavity spacer 91 may be opened or closed annular spacers or have other shapes, and a receiving space in which the chip 4 is received is formed between the annular spacers. The insulating cavity spacer 91 may be glued on the tube socket 2 by the glue.

It may be understood that in other embodiments, the supporting structure 9 may comprise positioning portions, wherein each of the positioning portions is disposed on one end, which is plugged in the tube socket 2, of the corresponding pin 6, and the circuit board 2 is supported on the positioning portions. A receiving space 90 in which the chip 4 is received is formed by a space among the positioning portions on the plurality of pins. The chip 4 is suspended above an inside of the tube socket 2 in the receiving space 90, so as to prevent the chip 4 from being in contact with the tube socket 2 to be easily extruded.

The manner for disposing the positioning portions is no limit, for example, they may protrude out of an annular step, a plurality of spaced bumps and the like which are disposed on the pins 6, provided that the circuit board 3 is supported above the tube socket 2 and a spacing is formed between the two so as to form a receiving space in which the chip 4 is received.

The above description is only embodiments of the present invention and is not intended to limit the patent scope of the present invention, any equivalent structure or equivalent process modification made according to the contents of the specification and the accompanying drawings in the present invention, no matter whether it is directly or indirectly applied in any other related technical field, should be included within the patent protection scope of the present invention.

## Claims

1. A pyroelectric sensor, comprising a tube cap (1) and a tube socket (2) which are matched, a circuit board (3) disposed in said tube cap (1), a chip (4) and an induction unit (5) which are electrically connected with said circuit board (3), and a plurality of pins (6) which are plugged in said tube socket (2) and electrically connected with said circuit board (3); which is **characterized in that** said induction unit (5) is disposed at one side, which faces said tube cap (1), of said circuit board (3), and said chip (4) is disposed at another side, which faces said tube socket (2), of said circuit board (3).

2. The pyroelectric sensor according to claim 1, **characterized in that** the pyroelectric sensor further comprises an insulating spacer (8) supporting and rising said induction unit (5) on said circuit board (3), and said insulating spacer (8) is disposed between said induction unit (5) and said circuit board (3).

3. The pyroelectric sensor according to claim 1, **characterized in that** the pyroelectric sensor further comprises an insulating supporting structure (9) disposed between said tube socket (2) and said circuit board (3); and said circuit board (3) is disposed on said supporting structure (9) so that a receiving space (90) is formed between said circuit board (3) and said tube socket (2), and said chip (4) is disposed in said receiving space (90).

4. The pyroelectric sensor according to claim 3, **characterized in that** said supporting structure (9) comprises an insulating cavity spacer (91) disposed on said tube socket (2); and one end of each said pin (6) sequentially penetrates through said tube socket (2) and said insulating cavity spacer (91) and is electrically connected with said circuit board (3).

5. The pyroelectric sensor according to claim 4, **characterized in that** said insulating cavity spacer (91) comprises two arc-shaped spacers, and said receiving space (90) is formed between said arc-shaped spacers after being combined.

6. The pyroelectric sensor according to claim 3, **characterized in that** said supporting structure (9) comprises positioning portions, each positioning portion is disposed on one end, which is plugged in said tube socket (2), of the corresponding pin (6), said circuit board (3) is supported on said positioning portions, and said receiving space (90) is formed by a space among said positioning portions.

7. The pyroelectric sensor according to any one of claims 1-6, **characterized in that** the pyroelectric sensor further comprises an optical filter (7), wherein a window (10) is provided on a top surface, which is far away from said tube socket (2), of said tube cap (1), and said optical filter (7) is disposed in said window (10) and is opposite to said induction unit (5).

8. The pyroelectric sensor according to any one of claims 1-6, **characterized in that** said induction unit (5) comprises a pyroelectric sensing unit.

9. The pyroelectric sensor according to any one of claims 1-6, **characterized in that** said circuit board (3) comprises a substrate (31), and a resistor element (32) and a capacitor element (33) which are disposed on said substrate (31), wherein said resistor element (32), said capacitor element (33) and said induction unit (5) are all positioned at one side, which faces said tube cap (1), of said substrate (31), and said chip (4) is positioned at another side, which faces said tube socket (2), of said substrate (31).

10. The pyroelectric sensor according to claim 9, **characterized in that** said substrate (31) is provided with a plurality of through holes (30) corresponding to said pins (6), and the end portion of one end, which is plugged in said tube socket (2), of each pin (6) is disposed in said corresponding through holes (30) in a penetrating manner.
